# EUROPEAN PATENT SPECIFICATION

(11) **EP 2 169 005 B1**
(45) Date of publication and mention of the grant of the patent: **13.05.2015**
(21) Application number: 08776905.5
(22) Date of filing: 27.05.2008
(51) Int. Cl.: C08L 67/04, B29C 45/00, B29C 49/08, C08J 5/00, C08K 3/36, B29K 67/00, C08G 63/08, C08G 63/60, C08L 101/16

(54) **MOLDED ARTICLE HAVING HEAT RESISTANCE AND IMPACT RESISTANCE**
HITZE- UND STOSSRESISTENTER FORMARTIKEL
ARTICLE MOULÉ RÉSISTANT À LA CHALEUR ET AUX CHOCS

(30) Priority: 19.06.2007 JP 2007161810
(43) Date of publication of application: 31.03.2010
(73) Proprietor: Yoshino Kogyosyo Co., Ltd., Koto-ku Tokyo 136-8531 (JP)
(72) Inventor: KITORA, Shuichi, Isehara-shi Kanagawa 259-1103 (JP); SUZUKI, Masato, Isehara-shi Kanagawa 259-1103 (JP)
(74) Representative: Thurston, Joanna
(86) International application number: PCT/JP2008/059740
(87) International publication number: WO 2008/155980

(56) References cited:
- WO-A1-2007/040187
- WO-A1-2007/111183
- WO-A1-2008/090328
- JP-A- 08 253 665
- JP-A- 2006 265 439
- JP-A- 2008 050 565
- JP-A- 2008 063 456
- JP-A- 2008 081 619
- BEILA T., DUDA A., PENCZEK S.: 'Enhanced Melt Stability of Star-Shaped Stereocomplex As Compared with Linear Stereocomplexes' MACROMOLECULAR vol. 39, no. 11, 29 April 2006, pages 3710 - 3713, XP002480498

## Description

### TECHNICAL FIELD

The present invention relates to a molded article of a resin composition obtained by compounding a functional filler into a resin made from poly-L-lactic acid, the functional filler being yielded by a copolymerization of a compound having 2-4 hydroxyl groups with 1-100 molecules of D-lactic acid and a low-molecular-weight polymer selected from a group consisting of glycols, aliphatic polyesters and aromatic polyesters.

### RELATED ART

PET bottles become world-widely popular as a revolutionary container and are applied for soybean sauce, water for food, drinking water, light drinks and beers, which largely contribute to civil life and distribution. It is noted that the progression of plastics including PET bottles highly contributes to human life and industrial activity, whereas it becomes noticed as a factor causing environmental issues such as depletion of recent petroleum sources, global warming and so on.

As a countermeasure for these issues, it is attempted to develop plastics from botanical resources being a renewable resource. A polylactic acid resin is one of biodegradable resins obtained from renewable materials such as corn, potato and the like, and has excellent transparency and hardness and possesses properties similar to polystyrene currently and widely used in food containers and the like.

In the container field, PET bottles are most frequently used. Even in this field, the development of biodegradable resins is anticipated as a key word for solving the resource-waste issues. However, the development for use in the bottle is not promoting contrary to the anticipation at the present time.

Since the polylactic acid is a crystalline polymer, it is low in the melt viscosity required for the forming of the bottle and has no temperature stability and further slow in the crystallization rate and long in the shaping cycle. For example, WO 2007/040187 discloses a functional filler with polylactic acid as a matrix polymer. On the other hand, a method of lowering the crystallinity is adopted for increasing the melt viscosity to attain the stabilization, but such a method has drawbacks that the crystallinity is too low and the heat resistance of the resulting shaped product is deteriorated. Since the polylactic acid resin presently used has the melting temperature Tm of 155°C and a crystallinity of about 16%, there can not be expected the improvement of the heat resistance by the crystallization. As an example of preparing a container or preform using the polylactic acid resin, there is a report that a resin film of a polyvinyl alcohol-based coating agent is formed on a surface of a container made from polylactic acid (see JP 8244781 A). Another example of polylactic acid resin is found in JP 08 253665.

In order to develop a bottle using the polylactic acid as a starting material, therefore, it is required that the resin has the improved heat resistance and a good drop impact resistance in order to put the bottle into practical use. The present inventors have intensively consider a solution of the heat resistance issue and attempted to compound a functional filler having 2-4 hydroxyl groups such as D-lactic acid into a resin made from poly-L-lactic acid. As a result, it is found that the heat resistance of the resin can be improved. However, compounding the D-lactic acid into the resin made from poly-L-lactic acid involves a disadvantage that the drop impact resistance is significantly lowered. In order to address this disadvantage, it is necessary to study a further improvement of the resin obtained by compounding D-lactic acid into the resin made from poly-L-lactic acid.

### DISCLOSURE OF THE INVENTION

It is, therefore, an object of the invention to solve the above-mentioned problems by improving the drop impact resistance of a resin made from poly-L-lactic acid compounded with a functional filler without sacrificing the heat resistance.

In order to achieve the above-mentioned object, the present invention provides a molded article **characterized in that** said molded article is made from a resin composition obtained by compounding a functional filler into a resin made from a poly-L-lactic acid, the functional filler being yielded by a copolymerization of a compound having 2-4 hydroxyl groups with 1-100 molecules of D-lactic acid and a polymer having a molecular weight at 10,000 or less and selected from a group consisting of glycols, aliphatic polyesters and aromatic polyesters; the amount of the functional filler compounded is 5-20% by weight per poly-L-lactic acid; a stereo complex is formed between the D-lactic acid included in the functional filler and the L-lactic acid in the resin; and units of said polymer having a molecular weight of 10,000 or less, are copolymerized in units of poly-D-lactic acid in the functional filler.

When a functional filler obtained by a copolymerization of poly-D-lactic acid and a low-molecular-weight polymer such as polyethylene glycol selected from a group consisting of glycols, aliphatic polyesters and aromatic polyesters is compounded into a resin of poly-L-lactic acid, the heat resistance of the obtained resin is improved by poly-D-lactic acid in the filler, and the drop impact is absorbed by polyethylene glycol integrated introduced in the functional filler. Thus, by compounding the above-mentioned filler into the resin of poly-L-lactic acid, an enhancement of the heat resistance and an improvement of the drop impact resistance can be achieved.

As mentioned above, the present inventors have succeeded in an improvement of the drop impact resistance without sacrificing the heat resistance by compounding a functional filler yielded by a copolymerization of a compound having 2-4 hydroxyl groups with 1-100 molecules of D-lactic acid and a low-molecular-weight polymer selected from a group consisting of glycols, aliphatic polyesters and aromatic polyesters into a resin made from a poly-L-lactic acid.

The present invention, therefore, provides a molded article prepared by compounding functional filler into a resin made from poly-L-lactic acid. In the following examples, LACEA H400 made by Mitsui Chemicals Inc. is used as a resin made from poly-L-lactic acid, and the use of the resin is a preferable embodiment of the invention. However, the resin made from poly-L-lactic acid for use in the object of the invention is not limited thereto, and LACEA 440 available from Mitsui Chemicals Inc., Nature Works 7000D and 7032D available from Nature Works LLC U'z S12 and S22 available from Toyota Motor Corporation may be used.

In the following example, it is proved that the molded article according to the present invention prepared by compounding a functional filler containing the above-mentioned molecular weight of polyethylene glycol of 600 (PEG 600) into a resin has the significantly improved drop impact resistance as compared with a molded article prepared by compounding a filler not containing PEG 600 into a resin. In addition, this molded article shows a superior result of a storage test of at 50°C.

In a preferable embodiment of the invention, the polylactic acid has a number average molecular weight of 60,000-80,000. When the number average molecular weight is within the above range, it is possible to preferably shape hollow shaped products such as bottles and the like.

The functional filler is obtained by copolymerization of a compound having 2-4 hydroxyl groups with 1-100 molecules of D-lactic acid and a polymer having a molecular weight of 10,000 or less and selected from a group consisting of glycols, aliphatic polyesters and aromatic polyesters; the amount of the functional filler compounded is 5-20% by weight per poly-L-lactic acid; a stereo complex is formed between the D-lactic acid included in the functional filler and the L-lactic acid in the resin; and units of said polymer having a molecular weight of 10,000 or less, are copolymerized in units of poly-D-lactic acid in the functional filler. In the functional fillers, it is preferable that 30-50 molecules of D-lactic acid are graft-polymerized, and it is most preferable that 50 molecules of D-lactic acid are graft-polymerized. In the invention, the thermal crystallization can be made by the formation of a stereo-complex between D-lactic acid included in the functional filler and L-lactic acid in the resin, whereby the target effects such as heat resistance are obtained. The feature that it is preferable to graft-polymerize about 50 molecules of D-lactic acid is confirmed by a differential scanning calorimetry (DSC).

Moreover, when the polymerizing quantity of D-lactic acid is not more than 10 molecules, the formation of stereo-complex in H400+pentaerythritol could not be confirmed by DSC. Further, when the polymerizing quantity of D-lactic acid is not less than 50 molecules, the crystal of the stereo-complex itself becomes large, from which is further crystallized a homo polylactic acid, so that there may be unfavorably a tendency of being opacified.

In the invention, the compound in the functional filler is preferable to be sugars selected from polysaccharides and oligosaccharides. Particularly, the oligosaccharide is preferable to be a pentasaccharide. As a concrete example of the preferable sugars may be mentioned monosaccharides such as glucose, fructose disaccharides such as sucrose and the like; and polysaccharides such as starch, cyclodextrin.

In a further preferable embodiment of the invention, the compound in the functional filler is an inorganic compound such as silica nano particles or the like, or an organic compound selected from polyethylene glycol, trimethylol propane and pentaerythritol. In the case that the above-mentioned compound is polyethylene glycol, it is particularly preferable that the molecular weight of polyethylene glycol is within a range of 200-1,000.

Further, in the invention, the amount of the functional filler compounded is preferably 5-20% by weight, more preferably 10% by weight per the poly-L-lactic acid. If the functional filler is added in an amount of 30% or more by weight, the viscosity in the injection molding becomes low and hence there is caused a problem in the workability of the secondary shaping. Moreover, the formation of the stereo-complex between the filler and the lactic acid resin is confirmed by DSC when the amount of the filler compounded is 5% by weight, 10% by weight or 20% by weight.

In a further preferable embodiment of the invention, one or more melting peaks are existent in addition to the melting point of the resin made from poly-L-lactic acid alone as measured by the differential scanning calorimetry (DSC). The melting point of the resin made from poly-L-lactic acid alone is about 145°C to 170°C. As shown in the following examples, however, one or two melting peaks are observed even at a higher temperature of from about 180°C to 200°C by compounding the functional filler.

The melting peak observed at a temperature higher than that of the resin single body made from poly-L-lactic acid shows that L-lactic acid of the resin and D-lactic acid of the filler form a stereo-complex. The thus formed stereo-complex affects the crystallization behavior of the polylactic acid resin and contributes to the promotion of the crystallization, and hence the improvement of the heat resistance can be attained.

Further, the low-molecular-weight polymer is selected from a group consisting of glycols, aliphatic polyesters and aromatic polyesters. The term "low-molecular-weight" as used herein means the molecular weight of 10,000 or less. If the molecular weight is too large, the formation of the stereo-complex is inhibited. The introduced low-molecular-weight polymer such as glycols, aliphatic polyesters and aromatic polyesters has flexibility, so that it serves as a soft segment to impart the impact resistance to the resin thus obtained.

In the case that the above-mentioned low-molecular-weight polymer is aliphatic polyesters, the molecular weight is preferably 5,000 or less. As a concrete example of the preferable aliphatic polyesters may be mentioned polybutylene succinate (PBS) and polycaprolactone (PCL). In the case that the above-mentioned low-molecular-weight polymer is aromatic polyesters, the molecular weight is preferably 10,000 or less. As a concrete example of the preferable aromatic polyesters may be mentioned polyethylene terephthalate (PET) and polyethylene naphthalate (PEN). In the case that the above-mentioned low-molecular-weight polymer is glycols, the molecular weight is preferably 2,000 or less. In the case that the above-mentioned glycol is polyethylene glycol, the molecular weight is preferably within a range of 200-1,000. PEG 600, which is used in the following examples, is particularly preferred among others.

PEG 600 may be used as a polymerization initiator for polymerization reaction of poly-D-lactic acid, so that it is considered that it can easily be introduced into units of poly-D-lactic acid. The most remarkable feature of the present invention reside in a point that units of polyethylene glycol are copolymerized in units of poly-D-lactic acid in the functional filler used in the present invention to absorb the drop impact. It is considered that the molecular chains of polyethylene glycol do not form stereo-complex with L-lactic acid or D-lactic acid but move flexibly to give the drop impact resistance.

Moreover, the molded article according to the present invention may be made by compounding the functional filler into the resin made from poly-L-lactic acid and extrusion molding, compression molding or injection molding the resin compounded with the functional filler. The methods for extrusion molding, compression molding and injection molding are well known in the art.

The molded article according to the present invention may have various forms and shapes. The molded article according to the present invention may be, for example, a hollow shaped product used as a container for beverages. The molded article according to the present invention may also be formed as a thin elongated container such as a drink cup by means of injection molding. The elongated drink cup is, however, a way of example, and its form and shape is not particularly limited.

Further, the molded article according to the present invention may be a preform for forming a hollow shaped article. Forming a hollow shaped article by blow molding of the preform is also within a scope of the invention. As the blow molding method, biaxial blow molding and direct blow molding, which are well known in the art, are preferably used without limiting thereto.

### BRIEF DESCRIPTION OF THE DRAWINGS

FIG. 1 shows configurations of the conventional filler and the drop impact resistant filler;
FIG. 2 is a DSC chart for a sample pellet in which the conventional filler is compounded into PLA and a sample pellet in which the drop impact resistant filler is compounded into PLA;
FIG. 3 shows the shape of the bottle subjected to the drop test; and
FIG. 4 shows the volumetric change (upper), the total height change (middle) and the bottom depth change (lower) of the bottle formed from the resin in case of storing at 50°C;

### EXAMPLES

The following examples are given in illustration of the present invention and are not intended as limitation thereof.

### (Example 1: synthesis of filler)

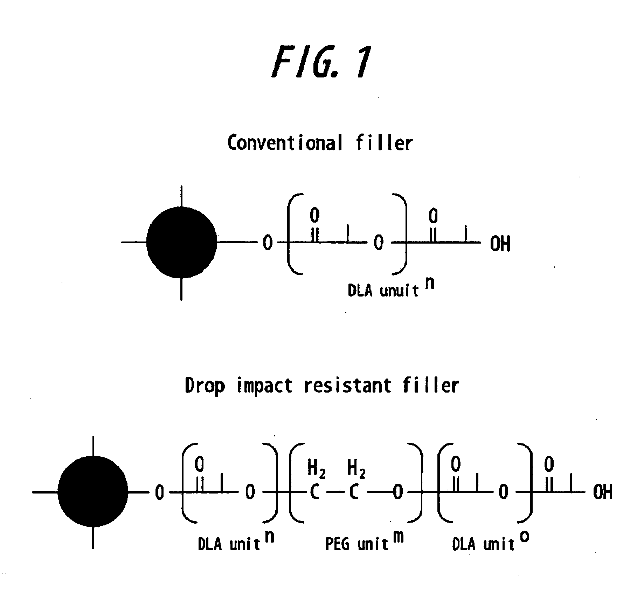

A filler in which units of PEG 600 are introduced into units of poly-D-lactic acid (hereinafter referred to as a drop impact resistant filler) and a filler having no unit of PEG 600 but units of poly-D-lactic acid (hereinafter referred to as a conventional filler) are synthesized in the following manner. The expected configuration of the conventional filler and the drop impact resistant filler thus synthesized are shown in FIG. 1.

The conventional filler not containing PEG 600 is made in the following manner.

### Starting material

| | | |
|---|---|---|
| Initiator | pentaerythritol (four functional type) | Kanto Kagaku |
| Repeating unit | 90% solution of D-lactic acid | Purac Japan |

### Synthetic method

1. The initiator, pentaerythritol, (7.4g) and D-lactic acid solution (1100g) are charged in a 1-litter separable flask.
2. The solution is heated at 130°C to remove water in the solution (24 hours).
3. The temperature is increased to 160°C and the solution is agitated for 24 hours.

The drop impact resistant filler containing PEG 600 is made in the following manner.

### Starting material

| | | |
|---|---|---|
| Initiator | pentaerythritol (four functional type) | Kanto Kagaku |
| Repeating unit | 90% solution of D-lactic acid | Purac Japan |
| Copolymerization component | PEG 600 | Kanto Kagaku |

### Synthetic method

1. The initiator, pentaerythritol, (6.8g) and D-lactic acid solution (1000g) are charged in a 1-litter separable flask.
2. The solution is heated at 130°C to remove water in the solution (24 hours).
3. The temperature is increased to 160°C, 45 g of PEG 600 are added after three hours, and then the solution is agitated for 48 hours.

As the below-mentioned sample for evaluation, a filler compounded with a flexibility improver for polylactic acid (PLA), Plamate PD-350 manufactured by Dainippon Ink is also used. Plamate PD-350 is a block copolymer having a structure of PLA-PBS-PLA. In this regard, PBS means polybutylene succinate.

### (Example 2: DSC measurement)

The conventional filler and the drop impact resistant filler are added to PLA by means of a biaxial extruder to give pellets. More specifically, polylactic acid resin, LACEA H400, and 10% by weight of a functional filler (the conventional filler or the drop impact resistant filler) are blended, and the bulk of the blended materials are charged into a feed slot of a biaxial extruder having a screw size L/D=43 (screw diameter Φ=35.5 mm). The charged materials are melted and kneaded to extrude a strand from a die, and the extruded strand is passed through a cooling water bath to allow the strand to solidify. Thereafter, the strand is cut by a pelletizer to give pellets. In this example, the bulk of the materials are charged into a main feed slot. It is noted that the functional filler may be charged separately into a side feed slot, or into the main feed slot or other feed slots by means of a liquid adding pump or the like. In order to examiner behaviors of temperature characteristics of the materials, DSC measurements are carried out. In the DSC measurements, DSC 6220 manufactured by SII Inc. is used and the measurements are carried out under a condition with a temperature range of 30-220°C and a temperature rising rate of 10°C/min.

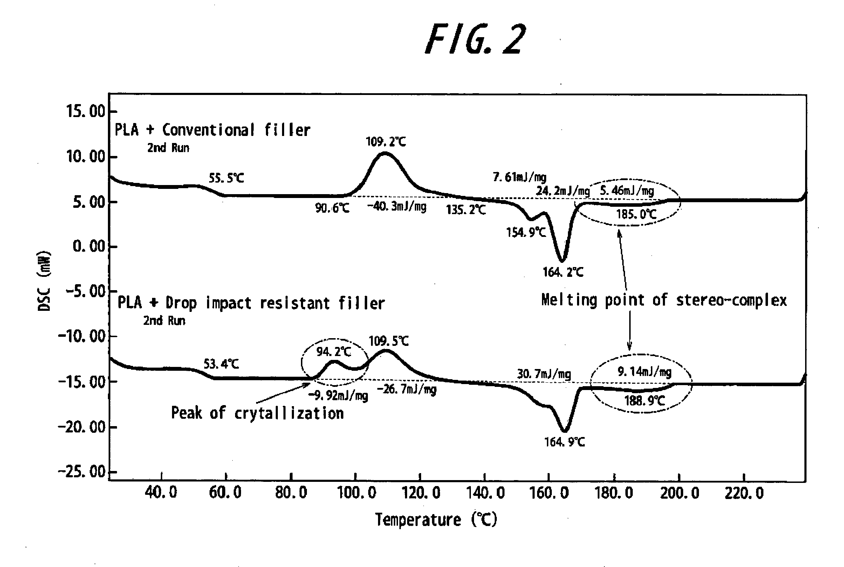

DSC charts of the pellets thus measured are shown in FIG. 2. In FIG. 2, the upper chart is for the pellets of PLA compounded with the conventional filler, and the lower chart is for the pellets of PLA compounded with the drop impact resistant filler. For both samples of PLA compounded with the conventional filler and PLA compounded with the drop impact resistant filler, a peak is observed at around 190°C which corresponds to the melting point of the stereo-complex between D-lactic acid and L-lactic acid in the resin. Meanwhile, only for the sample of PLA compounded with the drop impact resistant filler, a peak is observed at around 90°C. It is, therefore, considered that the peak at around 90°C is derived from PEG.

### (Example 3: Drop test)

In order to evaluate drop impact resistance, bottles made from PLA resin compounded with filler are prepared and subjected to a drop test. The samples used for the evaluation are the following four types. The amount of the filler compounded to PLA is 10% by weight per PLA.
(1) LACEA H400 made by Mitsui Chemicals Inc. alone
(2) LACEA H400 made by Mitsui Chemicals Inc. + the conventional filler
(3) LACEA H400 made by Mitsui Chemicals Inc. + Plamate PD-350 + the conventional filler (Plamate: 20% by weight and filler: 10% by weight are compounded)
(4) LACEA H400 made by Mitsui Chemicals Inc. + the drop impact resistant filler

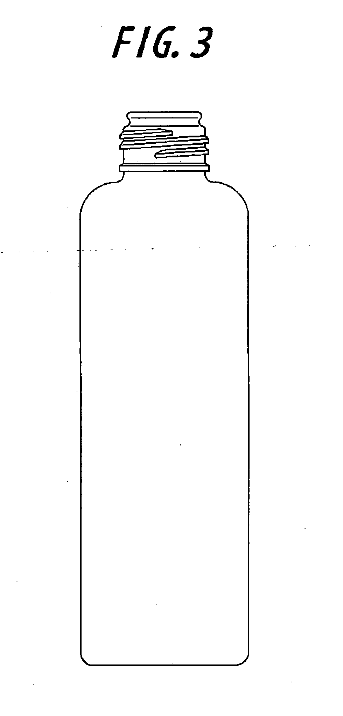

The above-mentioned four samples are molded into 180 ml bottles and the molded bottles are subjected to the test. That is, preform products for 180 ml bottle having a wall thickness of 3 mm are prepared by a molder, M-100A manufactured by Meiki Seisakusyo Co. Ltd. Then, the preform products are set in a biaxial blow molder with the heat set temperature of 55°C, 70°C, 90°C, 100°C and 110°C to mold 180 ml bottles. The bottle thus manufactured is shown in FIG. 3.

Each of the bottles thus manufactured is filled with 180 ml of water and then the bottles are sealed with plastic caps. After storing at 23 °C for 24 hours, the bottles are subjected to the drop test. The drop test is carried out by dropping the bottle in a vertical position from one meter high onto a concrete plate for ten times. Every time the bottle is dropped, the appearance of the bottle is inspected for a break and a crack. The result of the drop test is shown in Table 1. As a result, a crack is found in the bottle made from the resin consisting of LACEA H400 with the conventional filler after one to three drops. In contrast, no crack is found in the bottle made from the resin consisting of LACEA H400 with the drop impact resistant filler even after 10-20 drops, which, in turn, proves a significant improvement of the drop impact resistance as compared with the conventional filler. A crack is also found in the bottle made from the resin consisting of LACEA H400 with Plamate PD-350 and the conventional filler after one to three drops, which does not satisfy the required drop impact resistance.

**[Table 1]**

| Sample | Molding condition | MT, bottom=55°C | MT=70°C /bottom=60°C | MT=80°C /bottom=60°C | | |
|---|---|---|---|---|---|---|
| H400 alone | Result | 10 drops, OK | 10 drops, OK | 10 drops, OK | | |
| | Remarks | - | - | - | | |
| | | | | | | |

| Sample | Molding condition | MT, bottom=55°C | MT, bottom=70°C | MT, bottom=90°C | MT, bottom=55°C | MT, bottom=55°C |
|---|---|---|---|---|---|---|
| H400+conventional filler | Result | 8 drops, NG | 2 drops, NG | 3 drops, NG | 2 drops, NG | 3 drops, NG |
| | Remarks | - | Crack at bottom | Crack at bottom | Crack at bottom | Crack at bottom |
| H400+Plamate+ conventional filler | Result | 1 drop, NG | 3 drops, NG | 1 drop, NG | 1 drop, NG | 2 droops, NG |
| | Remarks | | Crack at bottom | Crack at bottom | Crack at bottom | Crack at bottom |
| H400+drop impact resistant filler | Result | 10 drops, OK | 10 OK | 10 drops, OK | 10 drops, OK | 10 drops, OK |
| | Remarks | - | - | - | - | 20 drops, OK |

### (Example 4: Storing test at 50°C)

In order to evaluate the heat resistance, a storing test at 50°C is carried out. The test is carried out by storing bottles made from the PLA resin compounded with the filler in a thermostatic chamber (manufactured by TABAI ESPEC CORP.) at 50°C without humidification for four weeks. The bottles used for the evaluation are the same four samples subjected to the drop test. The method and condition for molding the bottles are the same as those described with reference to the drop test in example 3.

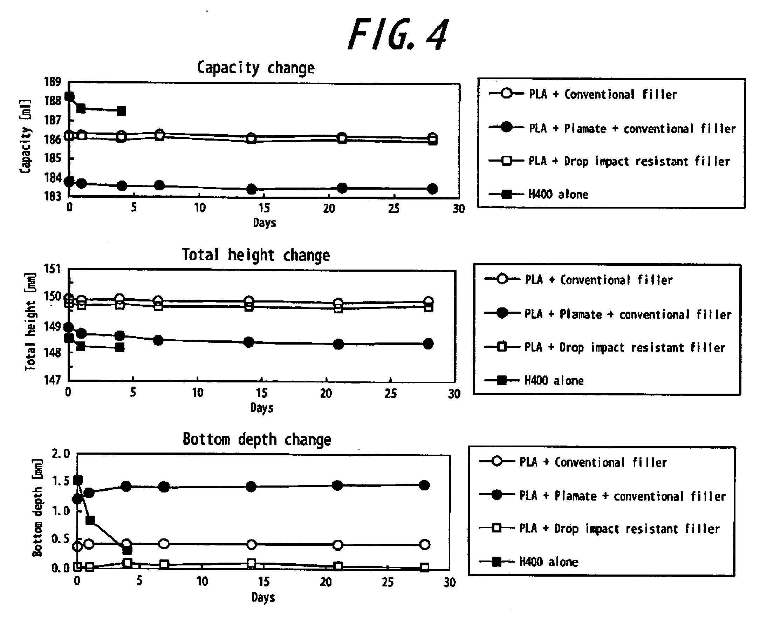

The above-mentioned bottles are stored at 50°C for 0 day, 1 day, 4 days, 7 days, 14 days, 21 days and 28 days, and changes in the total height, capacity and bottom depth of the bottles are measured. The results of the storing test at 50°C are shown in Table 2 and FIG. 4. In FIG. 4, the upper graph, middle graph and lower graph show the changes in the capacity, total height and bottom depth, respectively. The appearance of the bottle made from LACEA H400 alone changes immediately after storing at 50°C, so the test is terminated in four days. This shows that the conventional filler and the drop impact resistant filler contribute to the improvement of the heat resistance. In comparison between the bottles made from the resin consisting of LACEA H400 with the conventional filler and from the resin consisting of LACEA H400 with the drop impact resistant filler, they have similar heat resistance and substantially no changes are found in the total height, capacity and bottom depth during the storage at 50°C.

**[Table 2]**

| Sample | Days | 0 | 1 | 4 | 7 | 14 | 21 | 28 |
|---|---|---|---|---|---|---|---|---|
| PLA+ conventional filler | Total height (mm) | 149.91 | 149.89 | 149.91 | 149.85 | 149.86 | 149.82 | 149.87 |
| | Capacity (ml) | 186.24 | 186.27 | 186.20 | 186.28 | 186.11 | 186.17 | 186.11 |
| | Bottom depth (mm) | 0.38 | 0.40 | 0.42 | 0.42 | 0.42 | 0.42 | 0.43 |
| PLA+Plamate+conventional filler | Total height (mm) | 148.92 | 148.70 | 148.59 | 148.46 | 148.41 | 148.36 | 148.37 |
| | Capacity (ml) | 183.76 | 183.69 | 183.56 | 183.59 | 183.43 | 183.48 | 183.47 |
| | Bottom depth (mm) | 1.21 | 1.31 | 1.42 | 1.42 | 1.43 | 1.46 | 1.47 |
| PLA+drop impact resistant filler | Total height (mm) | 149.77 | 149.69 | 149.68 | 149.64 | 149.65 | 149.62 | 149.67 |
| | Capacity (ml) | 186.16 | 186.22 | 186.08 | 186.18 | 186.05 | 186.07 | 186.02 |
| | Bottom depth (mm) | 0.04 | 0.03 | 0.09 | 0.07 | 0.10 | 0.05 | 0.04 |
| H400 alone MT=70°C/bottom=60°C | Total height (mm) | 148.53 | 148.27 | 148.20 | | | | |
| | Capacity (ml) | 188.23 | 187.61 | 187.46 | | | | |
| | Bottom depth (mm) | 1.54 | 0.85 | 0.31 | | | | |

### INDUSTRIAL APPLICABILITY

When functional filler yielded by copolymerizing poly-D-lactic acid and a low molecular-weight polymer such as polyethylene glycol is compounded into a resin made from poly-L-lactic acid, the heat resistance of the resin is improved by poly-D-lactic acid in the filler, and the drop impact is absorbed by polyethylene glycol introduced in the functional filler. Accordingly, by compounding the above-mentioned functional filler into the resin made from poly-L-lactic acid, it is possible to increase the heat resistance and improve the drop impact resistance. The poly-L-lactic acid resin compounded with the above-mentioned functional filler, which exerts a superior effect on improvements of the heat resistance and the drop impact resistance, can overcome the defects of the conventional polylactic acid resin bottle. The present invention can facilitate a practical use of a polylactic acid bottle which is an environmentally friendly container.

## Claims

1. A molded article **characterized in that**:
said molded article is made from a resin composition obtained by compounding a functional filler into a resin made from a poly-L-lactic acid;
the functional filler is yielded by a copolymerization of a compound having 2-4 hydroxyl groups with 1-100 molecules of D-lactic acid and a polymer having a molecular weight of 10,000 or less and selected from glycols, aliphatic polyesters and aromatic polyesters;
the amount of the functional filler compounded is 5-20% by weight per poly-L-lactic acid;
a stereo-complex is formed between the D-lactic acid included in the functional filler and the *L*-lactic acid in the resin; and
units of said polymer having a molecular weight of 10,000 or less, are copolymerised in units of poly D-lactic acid in the functional filler.

2. The molded article according to claim 1, wherein the polylactic acid has a number average molecular weight of 60,000-80,000.

3. The molded article according to claim 1 or 2, wherein the compound comprises sugars selected from polysaccharides and oligosaccharides.

4. The molded article according to claim 3, wherein the oligosaccharide comprises a pentasaccharide.

5. The molded article according to claim 1 or 2, wherein the compound comprises an inorganic compound consisting of silica nano particles.

6. The molded article according to claim 1 or 2, wherein the compound comprises an organic compound selected from polyethylene glycol, trimethylol propane and pentaerythritol.

7. The molded article according to any one of claims 1-6, wherein the D-lactic acid is graft-polymerized in an amount of 30-50 molecules.

8. The molded article according to claim 1 or 2, wherein the functional filler is yielded by a copolymerization of pentaerythritol having four hydroxyl groups with 50 molecules of D-lactic acid and a low-molecular-weight polymer.

9. The molded article according to claim 1 or 2, wherein the functional filler is yielded by a copolymerization of polyethylene glycol having two hydroxyl groups with 50 molecules of D-lactic acid and a low-molecular-weight polymer.

10. The molded article according to claim 1 or 2, wherein the filler comprises a mixture of two or more kinds of the functional filler.

11. The molded article according to claim 9, wherein the molecular weight of the polyethylene glycol is within a range of 200-1,000.

12. The molded article according to any one of claims 1-11, wherein the molecular weight of the aliphatic polyesters is 5,000 or less.

13. The molded article according to any one of claims 1-11, wherein the molecular weight of the aromatic polyesters is 10,000 or less.

14. The molded article according to any one of claims 1-11, wherein the molecular weight of the glycols is 2,000 or less.

15. The molded article according to claim 16, wherein the amount of the functional filler compounded is 10% by weight per the poly-L-lactic acid.

16. The molded article according to any one of claims 1-17, wherein one or more melting peaks are existent in addition to the melting point of the resin made from poly-L-lactic acid alone as measured by the differential scanning calorimetry.

17. The molded article according to any one of claims 1-18, wherein the molded article comprises a biaxial blow molded article, a direct blow molded article, or an injection molded article.

## Patentansprüche

1. Formartikel, **dadurch gekennzeichnet,**
**dass** der Formartikel aus einer Harzzusammensetzung besteht, die durch Compoundieren eines funktionellen Füllstoffes in ein Harz aus Poly-L-Milchsäure hergestellt wird;
**dass** der funktionelle Füllstoff durch eine Copolymerisation einer Verbindung mit 2-4 Hydroxylgruppen mit 1-100 Molekülen D-Milchsäure und eines Polymers gebildet wird, das ein Molekulargewicht von 10.000 oder weniger besitzt und ausgewählt ist aus Glykolen, aliphatischen Polyestern und aromatischen Polyestern;
**dass** die Menge des compoundierten funktionellen Füllstoffes 5-20 Gew.-% pro Poly-L-Milchsäure beträgt;
**dass** zwischen der in dem funktionellen Füllstoff enthaltenen D-Milchsäure und der L-Milchsäure in dem Harz ein Stereokomplex gebildet ist; und
**dass** Einheiten des genannten Polymers einer relativen Molekülmasse von 10.000 oder weniger in Einheiten von Poly-D-Milchsäure in dem funktionellen Füllstoff copolymerisiert sind.

2. Formartikel gemäß Anspruch 1, wobei die Polymilchsäure ein Zahlenmittel Molekulargewichts von 60.000-80.000 aufweist.

3. Formartikel gemäß Anspruch 1 oder 2, wobei die Verbindung Zucker enthält, die aus Polysacchariden und Oligosacchariden ausgewählt sind.

4. Formartikel gemäß Anspruch 3, wobei das Oligosaccharid ein Pentasaccharid umfasst.

5. Formartikel gemäß Anspruch 1 oder 2, wobei die Verbindung eine aus Silica-Nanopartikeln bestehende anorganische Verbindung umfasst.

6. Formartikel gemäß Anspruch 1 oder 2, wobei die Verbindung eine organische Verbindung umfasst, die aus Polyethylenglykol, Trimethylolpropan und Pentaerythritol ausgewählt ist.

7. Formartikel gemäß einem der Ansprüche 1 bis 6, wobei die D-Milchsäure in einer Menge von 30-50 Molekülen pfropfpolymerisiert ist.

8. Formartikel gemäß Anspruch 1 oder 2, wobei der funktionelle Füllstoff hergestellt wird durch eine Copolymerisation von Pentaerythritol mit vier Hydroxylgruppen mit 50 Molekülen D-Milchsäure und einem Polymer von geringem Molekulargewicht.

9. Formartikel gemäß Anspruch 1 oder 2, wobei der funktionelle Füllstoff hergestellt wird durch eine Copolymerisation von Polyethylengklykol mit zwei Hydroxylgruppen mit 50 Molekülen D-Milchsäure und einem Polymer von geringem Molekulargewicht.

10. Formartikel gemäß Anspruch 1 oder 2, wobei der Füllstoff ein Gemisch aus zwei oder mehreren Arten des funktionellen Füllstoffes umfasst.

11. Formartikel gemäß Anspruch 9, wobei das Molekulargewicht des Polyethylenglykols in einem Bereich von 200-1.000 liegt.

12. Formartikel gemäß einem der Ansprüche 1 bis 11, wobei das Molekulargewicht der aliphatischen Polyester 5.000 oder weniger beträgt.

13. Formartikel gemäß einem der Ansprüche 1 bis 11, wobei das Molekulargewicht der aromatischen Polyester 10.000 oder weniger beträgt.

14. Formartikel gemäß einem der Ansprüche 1 bis 11, wobei das Molekulargewicht der Glykole 2.000 oder weniger beträgt.

15. Formartikel gemäß Anspruch 16, wobei die Menge des compoundierten funktionellen Füllstoffes 10 Gew.-% per Poly-L-Milchsäure beträgt.

16. Formartikel gemäß einem der Ansprüche 1 bis 17, wobei zusätzlich zu dem Schmelzpunkt des Harzes aus Poly-L-Milchsäure alleine zwei Schmelz-Spitzenwerte vorliegen, wie mittels dynamischer Differenzkalometrie gemessen.

17. Formartikel gemäß einem der Ansprüche 1 bis 18, wobei der Formartikel einen durch biaxiales Streckblasen hergestellten Artikel, ein durch direktes Blasformen hergestellten Artikel oder einen durch Spritzformen hergestellten Artikel umfasst.

## Revendications

1. Article moulé **caractérisé en ce que** :
ledit article moulé est fabriqué à partir d'une composition de résine obtenue par mélange d'une charge fonctionnelle avec une résine fabriquée à partir d'un poly(acide L-lactique) ;
la charge fonctionnelle est produite par copolymérisation d'un composé comprenant 2 à 4 groupes hydroxyle avec 1 à 100 molécules d'acide D-lactique et un polymère ayant une masse moléculaire de 10 000 ou moins et choisi parmi les glycols, les polyesters aliphatiques et les polyesters aromatiques ;
la quantité de la charge fonctionnelle mélangée est de 5 à 20 % en poids par poly(acide L-lactique) ;
un stéréo-complexe est formé entre l'acide D-lactique incorporé dans la charge fonctionnelle et l'acide L-lactique dans la résine ; et
des motifs dudit polymère ayant une masse moléculaire de 10 000 ou moins sont copolymérisés en motifs de poly(acide D-lactique) dans la charge fonctionnelle.

2. Article moulé selon la revendication 1, dans lequel le poly(acide lactique) a une masse moléculaire moyenne en nombre de 60 000 à 80 000.

3. Article moulé selon la revendication 1 ou 2, dans lequel le composé comprend des sucres choisis parmi les polysaccharides et les oligosaccharides.

4. Article moulé selon la revendication 3, dans lequel l'oligosaccharide comprend un pentasaccharide.

5. Article moulé selon la revendication 1 ou 2, dans lequel le composé comprend un composé inorganique constitué de nanoparticules de silice.

6. Article moulé selon la revendication 1 ou 2, dans lequel le composé comprend un composé organique choisi parmi le polyéthylène glycol, le triméthylolpropane et le pentaérythritol.

7. Article moulé selon l'une quelconque des revendications 1 à 6, dans lequel l'acide D-lactique est polymérisé par greffage en une quantité de 30 à 50 molécules.

8. Article moulé selon la revendication 1 ou 2, dans lequel la charge fonctionnelle est produite par une copolymérisation de pentaérythritol comprenant quatre groupes hydroxyle avec 50 molécules d'acide D-lactique et un polymère de faible masse moléculaire.

9. Article moulé selon la revendication 1 ou 2, dans lequel la charge fonctionnelle est produite par une copolymérisation de polyéthylène glycol comprenant deux groupes hydroxyle avec 50 molécules d'acide D-lactique et un polymère de faible masse moléculaire.

10. Article moulé selon la revendication 1 ou 2, dans lequel la charge comprend un mélange de deux types de charge fonctionnelle ou plus.

11. Article moulé selon la revendication 9, dans lequel la masse moléculaire du polyéthylène glycol est dans une plage de 200 à 1 000.

12. Article moulé selon l'une quelconque des revendications 1 à 11, dans lequel la masse moléculaire des polyesters aliphatiques est de 5 000 ou moins.

13. Article moulé selon l'une quelconque des revendications 1 à 11, dans lequel la masse moléculaire des polyesters aromatiques est de 10 000 ou moins.

14. Article moulé selon l'une quelconque des revendications 1 à 11, dans lequel la masse moléculaire des glycols est de 2 000 ou moins.

15. Article moulé selon la revendication 16, dans lequel la quantité de la charge fonctionnelle mélangée est de 10 % en poids par poly(acide L-lactique).

16. Article moulé selon l'une quelconque des revendications 1 à 17, dans lequel il existe un ou plusieurs pics de fusion en plus du point de fusion de la résine fabriquée à partir du poly(acide L-lactique) seul, mesuré par analyse calorimétrique différentielle.

17. Article moulé selon l'une quelconque des revendications 1 à 18, dans lequel l'article moulé comprend un article moulé par soufflage biaxial, un article moulé par soufflage direct ou un article moulé par injection.
